# EUROPEAN PATENT SPECIFICATION

(11) **EP 1 278 410 B1**
(45) Date of publication and mention of the grant of the patent: **16.06.2004**
(21) Application number: 01938148.2
(22) Date of filing: 24.04.2001
(51) Int. Cl.: A01G 31/00

(54) **PLANT GROWTH SUBSTRATES**
PFLANZSUBSTRATE
SUBSTRATS DE CROISSANCE

(30) Priority: 28.04.2000 EP 00303603
(43) Date of publication of application: 29.01.2003
(73) Proprietor: Rockwool International A/S, 2640 Hedehusene (DK)
(72) Inventor: BLAAKMEER, Anton, NL-5803 Le Venray (NL)
(74) Representative: Samuels, Lucy Alice
(86) International application number: PCT/EP2001/004945
(87) International publication number: WO 2001/082683

(56) References cited:
- EP-A- 0 313 255
- WO-A-92/04824
- GB-A- 1 336 426
- JP-A- 4 004 825

## Description

The present invention relates to plant growth substrates according to the preamble of claim 1 based on man-made vitreous fibres, which are hydrophilic due to the use of a selected wetting agent, to the use of such products and their production.

Growth substrates for plants have been known for many years which are based upon man-made vitreous fibres such as stone wool, glass wool or slag wool. These substrates may be provided in the form of slabs or other solid products or in the form of granulate.

These products generally comprise a binder, often a phenol-formaldehyde based binder, which provides integrity to the product. The products are subjected to curing at high temperatures in a curing oven after application of the binder.

It is essential that these substrates are able to take up and hold water and for this purpose it is well-known to include a wetting agent. Various general suggestions for suitable wetting agents have been made in the past. Examples include DD292828, which suggests a sulphobetaine and JP-A-2/166724, which includes a long list of non-ionic surfactants. JP-A-3/280811 discloses various other materials including bentonite and water-absorbing polymers.

However, in practice, despite these many suggestions, a single surfactant product has been used in commercial products as the wetting agent for many years. This is Triton CF-10, which is a non-ionic surfactant mixture of 85 wt.% alkyl aryl polyether, 15 wt.% octyl phenoxy polyoxthyethanol and less than 3 wt.% polyethylene glycol.

This surfactant has proved most effective over this period. In particular, it exhibits low phytotoxicity towards plants and good thermal stability as well as resulting in products which have good wet and dry strength.

However, there are some drawbacks in that there are have been suggestions that its breakdown products are damaging to health and are thus environmentally undesirable. This concern is unrelated to phytotoxicity, which for Triton CF-10 is low.

Furthermore, growth substrates are commonly subjected to wetting in a wetting line in which a spray of water droplets is applied to the substrate. Excess water and water which passes through the product is collected and recycled to the spraying system. The use of Triton CF-10 as the wetting agent can lead to foaming in the spraying system, which is undesired by the end users. This occurs despite the fact that the surfactant is described by its suppliers as a low-foaming surfactant.

It would be desirable to provide wetting agents against which it cannot be alleged that they are environmentally undesirable. It would also be desirable to produce products which exhibit low foaming in the wetting line, which maintain low phytotoxicity and have good thermostability, wettability and product strength.

In.WO97/07664 we describe an alternative system which uses a hydrophilic binder so that no wetting agent is required at all. This is one solution to the problem but is not appropriate for every application.

The object is achieved by the present invention by a plant growth substrate as characterized in claim 1. Further advantageous of the invention appear from the dependent claims.

According to the invention we provide a plant growth substrate product comprising man-made vitreous fibres, the product being impregnated with a wetting agent which is a non-ionic fatty acid polyglycol ester surfactant. Generally such surfactants are represented by the formula I RC(O)O[CH₂CH₂O]ₙH in which R is a fatty chain and n is at least 1, generally at least 2.

We have found surprisingly that this particular class of surfactants, out of all of the many known non-ionic surfactant materials, gives a particularly suitable combination of properties to the growth substrate product when it is used in place of Triton CF-10 and in fact has advantages over it.

It is not subject to any cautions over its environmental compatibility. Furthermore, we have surprisingly found that it has a lower level of phytotoxicity than Triton CF-10.

Formaldehyde release from products in which the binder material is based on formaldehyde is generally undesirable and we find that the products of the invention show no increase in formaldehyde release and can even show reduced formaldehyde release.

The products show good hydrophilicity.

It is important that any surfactant chosen as wetting agent is thermally stable because products of this type are routinely subjected to high temperatures during the process of curing binder. We have found that the particular surfactants used in the invention have excellent thermal stability, despite the fact that commercial literature associated with some of them advises against exposure to temperatures above 40°C.

Furthermore, the products show good wet and dry strength.

In particular, products containing the defined wetting agents can lead to fewer foaming difficulties in the wetting line. Furthermore, the wetting agent appears to show different water distribution properties and water release and uptake properties which can be advantageous in certain circumstances.

The wetting agent used in the invention is a non-ionic fatty acid polyglycol ester. In the formula I above, R is a fatty chain. Generally it has at least 6 carbon atoms, preferably at least 8 carbon atoms, more preferably at least 10 or 12 carbon atoms. Chain lengths of at least 15 carbon atoms are particularly preferred. It may be linear or branched and may contain cyclic groups. It is generally aliphatic. R may contain double or triple carbon bonds and thus can be alkenyl or alkynyl as well as alkyl. Preferably it is linear alkyl or alkenyl, more preferably alkenyl. Alkenyl groups may be mono or higher unsaturated but are preferably mono unsaturated. A particularly preferred R group is C₁₇H₃₃. Preferably unsaturation is at C₉.

The value of n denotes the number of ethoxy groups. Thus n is at least 1 and is preferably at least 3, more preferably 4 to 10, in particular 6 to 8. Generally n is not more than 12.

Commercially available surfactants are often in practice formed from a mixture of fatty acid polyglycol esters having a mixture of fatty acid chains. Such commercially available surfactants may be used in the invention, as may be mixtures of surfactants. Where the surfactant used comprises a mixture of different fatty acid polyglycol ester molecules, preferably at least 50%, more preferably at least 60% and most preferably at least 70% of the molecules (by weight of total polyglycol ester surfactant) is of the preferred types discussed above. In particular, molecules having fatty chains of at least 6, preferably at least 8, more preferably at least 10 or 12, in particular at least 15 carbon atoms, preferably form at least these preferred amounts of the total weight of surfactant.

A particularly preferred non-ionic fatty acid polyglycol ester surfactant which meets the formula I above is a commercially available surfactant sold under the name Rewopal EO 70 by Goldschmidt. This comprises predominantly oleic acid polyglycol ester in which R is C₁₇H₃₃ and n is, on average, from 6.5 to 7.5. The commercially available material is formed from oleic acid as raw material. The oleic acid is of seed origin. It comprises fatty acids having the following composition:
less than C₁₄ up to 1%,
C₁₄ up to 3 % ,
C₁₅ up to 1%,
C₁₆ 3 to 6%,
C₁₆:₁ 3 to 7%,
C₁₇ up to 2%,
C₁₈ up to 2%,
C₁₈:₁ 65 to 74%,
C₁₈:₂ 7 to 14%,
C₁₈:₃ up to 2 % ,
C above 18 up to 3%.

In the product of the invention the wetting agent is added in generally conventional amounts. When measured based on maximum volume of water which can be held in the product suitable amounts are from 1 to 20 ppm, preferably 5 to 100 ppm, more preferably 10 to 50 ppm. These values are calculated as mg wetting agent per kg water, assuming that the entire volume of the product is filled with water. Thus a block of size 10 cm by 10 cm by 6.5 cm is assumed to contain 650 ml (650 g) water.

Alternatively, the amount may be measured based on weight of fibres. In this case, suitable concentrations are from 100 to 600 ppm (mg/kg) , preferably 150 to 500 ppm, more preferably 200 to 450 ppm, in particular 300 to 400 ppm.

The MMV fibres may be any suitable fibres for production of plant growth substrates. They may be stone wool, glass wool or slag wool. Preferably they are stone. wool. Suitable compositions include those described in WO96/14274 and WO96/14454. In particular, they may contain levels of alumina above 16%, preferably above 18%.

The product is generally provided with a binder which gives integrity to the product. Preferred binders are curable formaldehyde resins such as phenol formaldehyde, urea formaldehyde and phenol urea formaldehyde resin.

The product may be provided in any suitable known form for growth substrate products. It comprises a matrix of MMV fibres. These can be formed by any conventional technique, for instance by centrifugal fiberisation of a melt having the desired composition.

The matrix of MMV fibres can be in the form of flakes or other granulates which can be poured into a tray, pot or other means for retaining the shape of the substrate. Generally, however, the fibre matrix and the plant growth substrate product have a predetermined three-dimensional shape. For instance it may be a plug or cube (for instance for seeding or propagation by cuttings or tissue culture plantlets) or a slab (which may be a cube, board, oblong or any other desired shape). Generally the plant growth substrate product is made by collecting mineral fibres formed by a fiberisation process as a web in the presence of a binder, if necessary cross-lapping this web to make a batt, and curing the binder in order to form a substantially rigid batt. The rigid batt may then be cut or formed into the desired shape, or granulated.

When the batt and the plant growth substrate product have a predetermined three-dimensional shape, the density is usually in the range 15 to 150 kg/m³, often around 40 to 100 kg/m³.

The binder is usually incorporated in the initial web and in the batt by being sprayed into the fibres as they are formed and collected into a web. The binder may include catalyst for promoting curing of the resin and/or silicone (for instance as described in WO97/07664) to improve still further the adhesion between the binder resin and the fibres.

The wetting agent is generally added at the same stage.

The resin is normally cured by heating the batt containing the matrix of fibres and the uncured bonding agent, but in some instances the binder may be self-curing, without heating.

If desired, a formaldehyde scavenger may be incorporated in the binder composition.

The plant growth substrate products according to the invention exhibit good hydrophilicity. This can be measured by means of the sinking time value. For a standard sinking time test a sample of product is take which is a cylinder of diameter 5 to 6 cm and depth 7.5 cm, taken from the bottom of a board (or other product shape). This sample is placed with its flat surface on the surface of a volume of water and the rate at which the sample sinks into the water is measured. Generally the rate is not more than 0.6 s/mm, preferably not more than 0.4 s/mm, more preferably not more than 0.2 s/mm.

In general, the amount of wetting agent required in the products according to the invention is greater than the amount of Triton SF-10 if the same sinking time is required. However, in the present invention, the claimed wetting agents exhibit far lower phytotoxicity than Triton CF-10, thus this additional amount of wetting agent does not give rise to phytotoxicity problems.

We do find that when plant growth is tested in the presence of the claimed wetting agent, and measured for instance by means of the length of the first leaf, the phytotoxicity of the claimed surfactants is significantly lower than that exhibited even by Triton CF-10, which has been used succesfully for many years. Results show phytoxicity of Rewopal EO 70 to be substantially the same as for a control with no wetting agent.

The products of the invention have good thermal stability. Thermal stability of the wetting agent is tested by placing a predetermined volume of wetting agent in water at a predetermined concentration in a petri dish in an oven at 105°C until the water evaporates. The sample is then placed in an oven for 10 minutes at various different temperatures. The initial temperature tested is 150°C and the subsequent testing temperatures are 175°C, 200°C, 225°C and 250°C. After each testing session the sample is allowed to cool and the wetting agent is dissolved in dichloromethane to the same volume as the initial volume in water. To this a cobalt salt is added. This results in formation of a blue complex and adsorption by the sample is measured by spectrophotometer. The greater the degradation of the wetting agent, the lower the absorption. Preferably the wetting agent and a product containing it can withstand these temperatures, ie exhibit low levels of degradation. The products of the invention can preferably withstand temperatures of at least 200°C, more preferably at least 225°C, most preferably at least 250°C.

The wetting agents of the invention show wash-out behaviour which is different from that exhibited by Triton CF-10. In particular, when the distribution of water over slab height at a water content of 50% of a slab containing Triton CF-10 is measured, this distribution is essentially the same in a non-flushed product and in a flushed product. However, in a product of the invention, the water distribution over slab height becomes more uniform after flushing.

The surfactants used in the invention, especially Rewopal EO70, show low foaming behaviour, which renders them more efficient as surfactants in the substrate.

A further potential advantage of the product is that it tends to have a drier appearance as it gives up water than does a product in which Triton CF-10 is the wetting agent. It is not clear why this effect arises and it is not clear that it is because the product is drier, but a dry appearance can be considered advantageous by some end users.

The surfactants used in the invention has good compression strength. For instance, a dry slab of thickness 10.3 cm, density 70 kg/m³ and binder content 2.5% may show compression strength across thickness of at least 100 N/cm², preferably at least 150 N/cm², more preferably at least 180 N/cm²; across width at least 10 N/cm²; and across length at least 10 N/cm², preferably at least 20 N/cm². For the same board, wet compression strength across thickness is preferably at least 100 N/cm², more preferably at least 140 N/cm²; wet compression strength across width is preferably at least 10 N/cm²; and wet compression strength across length is preferably at least 20 N/cm².

In a preferred aspect the hydrophobe has a carbon chain length of at least 15 carbons.

In a further preferred aspect the wetting agent is a non-ionic ethoxylated surfactant having an average degree of ethoxylation from 4 to 9, preferably 6 to 8.

The products of the invention may be used in any of the conventional systems in which growth substrates are used. In particular, aqueous nutrient is supplied to the substrate continuously or discontinuously and plants are grown in it.

The invention is of particular value when the plant growth substrate product is saturated with water on a wetting line in which a spray of water droplets is applied to the product and run-off water is recirculated to the spraying system.

### Examples

### Example 1

A stone wool melt having a composition comprising at least 18% alumina is fiberised using a cascade spinner. The fibres are sprayed with resin binder (phenol urea formaldehyde resin) and wetting agent. The sprayed fibres are collected as a web which is then cross-lapped to form a batt. The cross-lapped batt is compressed and cured in an oven to produce a final slab which is cut to the desired size. In the final product the level of wetting agent is approximately 30 to 40 ppm based on maximum volume of water in the product. The wetting agent is Rewopal EO 70. The level of binder is approximately 2.5%. The final product is in the form of a board of thickness 103 mm. The density is 70 kg/m³.

### Comparative Example 1

A product is made in substantially the same manner as in Example 1, except that the wetting agent is Triton CF-10 and the amount in the final product is approximately 15 ppm.

The water distribution over slab height at 50% water content is measured for the products of Example 1 and Comparative Example 1.

For Example 1 the distribution is as follows: 5.3 cm, 35%; 3.8 cm, 43%; 2.3 cm, 56%; 0.8 cm, 66%.

For Comparative Example 1 the distribution is as follows: 5.3 cm, 37%; 3.8 cm, 46%, 2.3 cm, 55%, 0.8 cm, 62%.

The products are then flushed with water and the water distribution over slab height at 50% water content again measured.

For the product of Example 1 the distribution is as follows: 5.3 cm, 42%, 3.8 cm, 46%, 2.3 cm, 56%; 0.8 cm, 56%.

For Comparative Example 1 the water distribution is the same as before flushing.

Thus it can be seen that the water distribution in the product of the invention is modified to become more even over height on flushing.

### Comparative Example 3

Various other potential wetting agent materials were also tested but showed the following results:
a) Laurapal 0205, ethoxylated C₁₀₋₁₂ alcohol: phytotoxicity comparable with Triton CF-10, but unstable at temperatures above 175°C.
b) Sodium diisooctyl sulphosuccinate, anionic surfactant: highly phytotoxic.
c) Modified polyether trisiloxane non-ionic surfactant: not thermally stable above 175°C, phytotoxic.
d) Surfynol 465 ethoxylated tetramethyldecynediol, average degree of ethoxylation 10: not phytotoxic but thermostability lower than Triton CF-10.
e) Surfynol 440, as (d) but average degree of ethoxylation 3.5: phytotoxicity comparable with Triton CF-10, but unstable above 225°C.
f) Plurafac LF300, ethoxylated C₁₃ alcohol non-ionic surfactant: phytotoxic, thermally as stable as Triton CF-10.

Thus it can be seen that various other non-ionic surfactant materials show high phytotoxicity in comparison with the wetting agents used in the invention and in comparison with Triton CF-10. Those which show low phytotoxicity show low thermostability, even though some are promoted as thermally stable.

We find that the wetting agents of the invention, out of all possible wetting agents, show the desired combination of properties.

## Claims

1. A plant growth substrate product comprising man-made vitreous fibres (MMV fibres) wherein the product is impregnated with a wetting agent, **characterised in that** the wetting agent is a non-ionic fatty acid polyglycol ester surfactant.

2. A product according to claim 1 in which the fatty acid has a carbon chain length of at least 15 carbons.

3. A product according to claim 1 or claim 2 in which the surfactant has an average degree of ethoxylation from 4 to 9, preferably 6 to 8.

4. A product according to any preceding claim in which the wetting agent has the formula RC(O)O[CH₂CH₂O]ₙH in which R is a linear or branched, cyclic or non-cyclic, alkyl, alkenyl or alkynyl group having at least 6 carbon atoms, preferably at least 8 carbon atoms and n is at least 1, preferably at least 4.

5. A product according to claim 4 in which R is a linear non-cyclic alkyl or alkenyl group having at least 15, preferably at least 16 carbon atoms.

6. A product according to claim 4 or claim 5 in which R is a mono-unsaturated alkenyl group.

7. A product according to any of claims 4 to 6 in which R is a C₁₇H₃₃ group, preferably unsaturated at C₉.

8. A product according to any of claims 4 to 7 in which n has a value of from 4 to 10, preferably from 6 to 8.

9. A product according to any preceding claim in which the amount of wetting agent is from 1 to 200 ppm, preferably 5 to 100 ppm, more preferably 10 to 50 ppm, by weight based on product volume.

10. A product according to any preceding claim having a sinking time of not more than 0.6 s/mm, preferably not more than 0.4 s/mm, more preferably not more than 0.2 s/mm.

11. Use of a product according to any of claims 1 to 10 as a growth substrate.

12. Use according to claim 11 comprising wetting the product on a wetting line by applying to the product a spray of water droplets, the wetting process comprising recirculating run-off water to the spraying system.

13. A process for the production of a plant growth substrate according to any of claims 1 to 10 comprising producing man-made vitreous fibres and applying the wetting agent according to claim 1 to the fibres.

## Patentansprüche

1. Pflanzenwachstumssubstrat-Produkt umfassend künstliche glasartige Fasern (MMV-Fasern), wobei das Produkt mit einem Benetzungsmittel imprägniert ist, **dadurch gekennzeichnet, dass** das Benetzungsmittel ein nicht-ionisches Fettsäurepolyglycolester-Tensid ist.

2. Produkt nach Anspruch 1, in welchem die Fettsäure eine Kohlenstoff-Kettenlänge von mindestens 15 Kohlenstoffen aufweist.

3. Produkt nach Anspruch 1 oder Anspruch 2, in welchem das Tensid einen durchschnittlichen Ethoxylierungsgrad von 4 bis 9, vorzugsweise 6 bis 8, aufweist.

4. Produkt nach irgendeinem vorhergehenden Anspruch, in welchem das Benetzungsmittel die Formel RC(O)O[CH₂CH₂O]ₙH aufweist, worin R eine lineare oder verzweigte, cyclische oder nicht cyclische Alkyl-, Alkenyl- oder Alkinylgruppe mit mindestens 6 Kohlenstoffatomen, vorzugsweise mindestens 8 Kohlenstoffatomen, ist und n mindestens 1, bevorzugt mindestens 4, ist.

5. Produkt nach Anspruch 4, in welchem R eine lineare, nicht cyclische Alkyloder Alkenylgruppe mit mindestens 15 und bevorzugt mindestens 16 Kohlenstoffatomen ist.

6. Produkt nach Anspruch 4 oder Anspruch 5, in welchem R eine monoungesättigte Alkenylgruppe ist.

7. Produkt nach irgendeinem der Ansprüche 4 bis 6, in welchem R eine C₁₇H₃₃-Gruppe ist, bevorzugt an C₉ ungesättigt.

8. Produkt nach irgendeinem der Ansprüche 4 bis 7, in welchem n einen Wert von 4 bis 10, bevorzugt 6 bis 8, aufweist.

9. Produkt nach irgendeinem vorhergehenden Anspruch, in welchem die Menge an Benetzungsmittel 1 bis 200 ppm, bevorzugt 5 bis 100 ppm und bevorzugter 10 bis 50 ppm, Gewicht, bezogen auf das Produktvolumen, beträgt.

10. Produkt nach irgendeinem vorhergehenden Anspruch mit einer Sinkzeit von nicht mehr als 0,6 s/mm, bevorzugt nicht mehr als 0,4 s/mm und bevorzugter nicht mehr als 0,2 s/mm.

11. Verwendung eines Produkts nach irgendeinem der Ansprüche 1 bis 10 als Wachstumssubstrat.

12. Verwendung nach Anspruch 11, umfassend das Befeuchten des Produkts in einer Befeuchtungsanlage durch Aufbringen eines Sprühnebels aus Wassertröpfchen auf das Produkt, wobei das Befeuchtungsverfahren das Rezirkulieren von Ablaufwasser zum Sprühsystem umfasst.

13. Verfahren zur Herstellung eines Pflanzenwachstumssubstrats nach irgendeinem der Ansprüche 1 bis 10, umfassend die Herstellung von künstlichen glasartigen Fasern und das Aufbringen des Benetzungsmittels nach Anspruch 1 auf die Fasern.

## Revendications

1. Produit substrat de croissance de plantes comprenant des fibres vitreuses artificielles (FVA), le produit étant imprégné d'un agent mouillant, **caractérisé en ce que** l'agent mouillant est un agent tensioactif de type ester de polyglycol d'acide gras non ionique.

2. Produit selon la revendication 1, dans lequel l'acide gras a une longueur de chaîne carbonée d'au moins 15 atomes de carbone.

3. Produit selon la revendication 1 ou la revendication 2, dans lequel l'agent tensioactif a un degré moyen d'éthoxylation de 4 à 9, de préférence de 6 à 8.

4. Produit selon l'une quelconque des revendications précédentes, dans lequel l'agent mouillant a la formule RC(O)O[CH₂CH₂O]ₙH dans laquelle R est un groupe alkyle, alcényle ou alcynyle linéaire ou ramifié, cyclique ou non cyclique, d'au moins 6 atomes de carbone, de préférence d'au moins 8 atomes de carbone, et n est au moins égal à 1, de préférence au moins égal à 4.

5. Produit selon la revendication 4, dans lequel R est un groupe alkyle ou alcényle non cyclique linéaire ayant au moins 15, de préférence au moins 16 atomes de carbone.

6. Produit selon la revendication 4 ou la revendication 5, dans lequel R est un groupe alcényle mono-insaturé.

7. Produit selon l'une quelconque des revendications 4 à 6, dans lequel R est un groupe C₁₇H₃₃, de préférence insaturé au niveau de C₉.

8. Produit selon l'une quelconque des revendications 4 à 7, dans lequel n a une valeur de 4 à 10, de préférence de 6 à 8.

9. Produit selon l'une quelconque des revendications précédentes, dans lequel la quantité d'agent mouillant est de 1 à 200 ppm, de préférence de 5 à 100 ppm, de façon plus préférable de 10 à 50 ppm en masse par rapport au volume du produit.

10. Produit selon l'une quelconque des revendications précédentes, ayant un temps de coulée dans l'eau d'au plus 0,6 s/mm, de préférence d'au plus 0,4 s/mm, de façon plus préférable d'au plus 0,2 s/mm.

11. Utilisation d'un produit selon l'une quelconque des revendications 1 à 10 comme substrat de croissance.

12. Utilisation selon la revendication 11, comprenant le mouillage du produit sur une ligne de mouillage par pulvérisation sur le produit de gouttelettes d'eau, la technique de mouillage comprenant le recyclage de l'eau écoulée dans le système de pulvérisation.

13. Procédé de production d'un substrat de croissance de plantes selon l'une quelconque des revendications 1 à 10, comprenant la production de fibres vitreuses artificielles et l'application de l'agent mouillant selon la revendication 1 aux fibres.
